**Europäisches Patentamt**

**European Patent Office**

**Office européen des brevets**

(19)

(11) **EP 1 191 818 A2**

(12) **EUROPÄISCHE PATENTANMELDUNG**

| | |
|---|---|
| (43) Veröffentlichungstag:<br>**27.03.2002 Patentblatt 2002/13** | (51) Int Cl.⁷: **H04S 1/00** |

(21) Anmeldenummer: **01120213.2**

(22) Anmeldetag: **23.08.2001**

| | |
|---|---|
| (84) Benannte Vertragsstaaten:<br>**AT BE CH CY DE DK ES FI FR GB GR IE IT LI LU MC NL PT SE TR**<br>Benannte Erstreckungsstaaten:<br>**AL LT LV MK RO SI** | (72) Erfinder:<br>• **Gierl, Stefan, Dr.-Ing.**<br>  **76133 Karlsruhe (DE)**<br>• **Benz, Christoph, Dipl.-Ing.**<br>  **77797 Ohlsbach (DE)**<br>• **Zahn, Michael, Dipl.-Ing.**<br>  **76337 Waldbronn (DE)** |
| (30) Priorität: **11.09.2000 DE 10044824** | |
| (71) Anmelder: **BECKER GmbH**<br>**D-76307 Karlsbad (DE)** | (74) Vertreter: **Patentanwälte**<br>**Westphal, Mussgnug & Partner**<br>**Waldstrasse 33**<br>**78048 Villingen-Schwenningen (DE)** |

(54) **Verfahren und Vorrichtung zur Erfassung der Tonbetriebsart eines Funksignals**

(57)   Zum Erfassen der Tonbetriebsart eines Funksignals wird eine Metrik zum Beurteilen der Ähnlichkeit der Signale der zwei Tonkanäle (0,5(L+R), R) definiert, und die Tonbetriebsart wird von einem Komparator (4) anhand eines von einer Metrikschaltung (3) an den Signalen der Tonkanäle ermittelten Werts der Metrik festgestellt.

Fig.

**Beschreibung**

Die vorliegende Erfindung betrifft die Erfassung der Tonbetriebsart eines Funksignals, insbesondere eines Rundfunk- oder Fernsehsignals.

Gegenwärtige Fernsehsignalnormen sehen für die Funkübertragung von Stereoton zwei Tonträger TT1 und TT2 vor, wobei auf dem ersten Tonträger TT1 im Stereobetrieb ein Mittelwert 0,5(L+R) des linken und rechten Tonkanals L bzw. R und auf dem zweiten Tonträger TT2 nur das Signal R des rechten Tonkanals übertragen wird. Am Empfänger werden diese beiden Tonträger wieder in einen linken Kanal L = 2 x TT1 - TT2 und einen rechten Kanal R = TT2 zerlegt. Damit ein Empfänger in der Lage ist, zu erkennen, ob es sich bei den empfangenen zwei Tonkanälen um zwei identische Monosignale, zwei Stereokanäle oder um Zweikanalton handelt, wird am Sender dem zweiten Tonträger TT2 ein 54 kHz-Hilfsträger aufmoduliert, der eine der aktuellen Tonbetriebsart entsprechende Amplitudenmodulation aufweist.

Diese Amplitudenmodulation ist der Grund dafür, daß die Erfassung der verwendeten Tonbetriebsart für einen Betrieb des Empfängers in einem Fahrzeug zu störanfällig ist.

Aufgabe der Erfindung ist, ein Verfahren und eine Vorrichtung anzugeben, die eine weniger störungsempfindliche Erfassung der Tonbetriebsart ermöglichen.

Die Aufgabe wird zum einen gelöst durch ein Verfahren mit den Merkmalen des Anspruchs 1. Als Metrik kann ein weitgehend beliebiges Verfahren eingesetzt werden, das dazu geeignet ist, Unterschiede zwischen den Verläufen zweier Signale zu quantifizieren und damit vergleichbar zu machen.

Wenn die anhand der Metrik quantifizierte Ähnlichkeit der Signale der zwei Tonkanäle einen vorgegebenen ersten Grenzwert unterschreitet, so kann daraus gefolgert werden, daß ein Zweikanalton-Signal vorliegen muß. Wenn die Ähnlichkeit hingegen einen zweiten, höheren Grenzwert überschreitet, so wird angenommen, daß die Tonbetriebsart Mono ist. Der Grund dafür ist, daß bei Betriebsart Mono die auf den zwei Trägern TT1, TT2 übertragenen Tonsignale bis auf eventuelle Störeinflüsse identisch sind und somit einen hohen Grad von Ähnlichkeit aufweisen müssen, wohingegen im Falle eines Stereosignals Unterschiede zwischen den Signalen der zwei Kanäle sich durch Laufzeit-, Phasen- und Intensitätsabweichungen einzelner Stimmen auf den zwei Kanälen ergeben. Im Falle von Zweikanalton stehen die Signalinhalte der zwei Kanäle allenfalls in einem lockeren Zusammenhang, so etwa bei der Übertragung eines Films, wo auf einem Kanal der Originalton und auf einem zweiten eine synchronisierte Fassung übertragen wird.

Um die Unterschiede zwischen den Tonsignalen der zwei Kanäle zu quantifizieren, sind diverse Metriken geeignet. So können Metriken z.B. auf Grundlage der Differenz der Signale der zwei Tonkanäle gebildet werden, z.B. in Form eines zeitlich gemittelten Betragsquadrates dieser Differenz, wobei der Wert dieses Betragsquadrates um so kleiner ausfällt, je ähnlicher die zwei Signale sind.

Besonders bevorzugt ist die Möglichkeit, die Ähnlichkeit der Signale durch Bildung einer Kreuzkorrelation zu quantifizieren. Eine solche Kreuzkorrelation hat den Vorteil, daß sie bei großer Ähnlichkeit der zu vergleichenden Signale nicht-verschwindende Werte liefert, wohingegen die Kreuzkorrelation gegen 0 geht, wenn kein Zusammenhang zwischen den zu vergleichenden Signalen besteht. Es können daher nicht zwei Signale nur deshalb als ähnlich beurteilt werden, weil sie zu schwach sind, um eine sichere Beurteilung zu erlauben.

Die Aufgabe wird ferner gelöst durch eine Vorrichtung zum Erfassen der Tonbetriebsart eines Funksignals, wie in Anspruch 7 definiert.

Da bei herkömmlichen Fernseh-Funksignalen ein Tonträger, wie bereits oben angegeben, einen Hilfsträger enthält, dessen Amplitude gemäß der verwendeten Tonbetriebsart moduliert ist, ist es zweckmäßig, wenn dem für diesen Tonträger bestimmten Eingang der Vorrichtung ein Filter vorgeschaltet ist, daß den Hilfsträger unterdrückt, um auszuschließen, daß dieser als ein Unterschied zwischen den zwei Tonkanälen des Funksignals erfaßt wird. Da nicht ausgeschlossen ist, daß ein solches Filter den Frequenzgang des ihm zugeordneten Tonkanals auch im zu vergleichenden hörbaren Spektralbereich beeinflußt, ist ein zweites, identisches Filter vorzugsweise auch dem zweiten Eingang der Vorrichtung vorgeschaltet, dessen Eingangssignal keinen Hilfsträger enthält, um zu gewährleisten, daß eine eventuelle Veränderung des Frequenzgangs auf beiden Kanälen die gleiche ist.

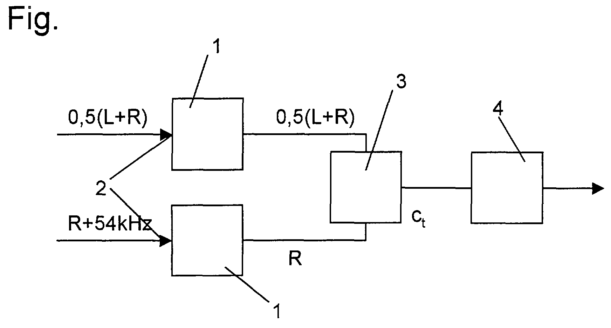

Weitere Merkmale und Vorteile der Erfindung ergeben sich aus der nachfolgenden Beschreibung eines Ausführungsbeispiels mit Bezug auf die beigefügte Figur.

Diese Figur zeigt ein Blockdiagramm einer erfindungsgemäßen Vorrichtung zum Erfassen der Tonbetriebsart eines Fernsehsignals. Die Vorrichtung umfaßt zwei Tiefpaßfilter 1 mit Eingängen 2, die gleichzeitig die Eingänge der Erfassungsvorrichtung bilden. Die Ausgänge der Tiefpaßfilter 1 sind an eine Metrikschaltung, hier einen Kreuzkorrelator 3, angeschlossen. An den Ausgang des Kreuzkorrelators 3 ist ein Komparator 4 angeschlossen, der ein Statussignal ausgibt, welches die Tonbetriebsart des empfangenen Funksignals anzeigt.

Jeder der zwei Eingänge 2 der Vorrichtung ist einem Tonträger TT1 oder TT2 des Funksignals zugeordnet; ein Eingang 2 empfängt somit das auf dem Tonträger TT1 übertragene Signal 0,5(L+R), wobei L und R jeweils die auf dem linken bzw. rechten Kanal des Empfängers auszugebenden Tonsignale darstellen, und der andere Eingang empfängt den rechten Kanal R zusammen mit einem 54 kHz-Hilfsträger.

Die identischen Tiefpaßfilter 1 weisen eine Grenzfrequenz auf, durch die der Hilfsträger vollständig unterdrückt wird, wohingegen die hörbaren spektralen Teile der eingegebenen Signale im wesentlichen unverändert durchgehen. Somit liegen an den zwei Eingängen der Metrikschaltung 3 Signale R bzw. 0,5(L+R) an. Die Metrikschaltung 3 bestimmt einen gleitenden Mittelwert der Leistungen der zwei Eingangssignale sowie einen in entsprechender Weise gleitend gemittelten Kreuzkorrelationskoeffizienten. Diese Erfassung kann z.B. stattfinden, indem die zwei Eingangssignale periodisch abgetastet werden und aus den an den zwei Eingängen der Metrikschaltung jeweils zum Zeitpunkt $t_n$ erhaltenen Abtastwerten $i_1(t_n)$ und $i_2(t_n)$ mittlere Intensitäten $I_1(t_n)$, $I_2(t_n)$ der zwei Eingangssignale $I_1$, $I_2$ und ein Kreuzkorrelationskoeffizient C nach folgenden Formeln berechnet werden:

$$I_1(t_n) = I_1(t_{n-1})\,(1-\varepsilon) + \varepsilon \cdot i_1(t_n)^2$$

$$I_2(t_n) = I_2(t_{n-1})\,(1-\varepsilon) + \varepsilon \cdot i_2(t_n)^2$$

$$C(t) = C\,(t_{n-1})\,(1-\varepsilon) + \varepsilon \cdot i_1(t_n)\,i_2(t_n)$$

wobei $t_{n-1}$ der vorhergehende Abtastzeitpunkt ist and $\varepsilon$ eine positive Zahl und wesentlich kleiner als 1 ist und ein Maß für die Zeitkonstante der Mittelwertbildung darstellt.

Ein normierter Kreuzkorrelationskoeffizient $c_t$ wird erhalten nach

$$c_t = C_t / (I_{1t} - I_{2t}).$$

Der normierte Kreuzkorrelationskoeffizient $c_t$ bildet das Ausgangssignal der Metrikschaltung 3. Sein Wert ist gleich 1, wenn die Tonbetriebsart des Funksignals Mono ist und die Eingangssignale der Erfassungsvorrichtung somit identisch sind. Sein Wert liegt in der Umgebung von 0,5, wenn kein Zusammenhang zwischen rechtem und linkem Kanal L und R besteht. Im Falle eines Zweikanalton-Signals ist daher ebenfalls ein Kreuzkorrelationskoeffizient c von 0,5 oder geringfügig darüber zu erwarten.

Der Komparator 4 vergleicht den Kreuzkorrelationskoeffizienten c(t) mit zwei vorgegebenen Grenzwerten, deren genauer Wert zwischen 0,5 und 1 experimentell optimiert worden ist. Falls c(t) über dem größeren der zwei Grenzwerte liegt, wird festgestellt, daß der Tonbetriebszustand des Funksignals Mono ist, falls er kleiner als der kleinere Grenzwert ist, wird Zweikanalton-Betriebsart festgestellt. Falls das Ergebnis dazwischen liegt, wird Stereo-Betriebsart angenommen.

Es ist zu erwarten, daß während des Betriebs der Vorrichtung der Kreuzkorrelationskoeffizient meist in einem von drei relativ kleinen Teilintervallen des Intervalls [0,5; 1] liegen wird, die einer der drei Betriebsarten entsprechen, so daß Situationen, wo der Kreuzkorrelationskoeffizient einen der zwei Grenzwerte kreuzt, nur selten auftreten. Falls dennoch eine Empfangssituation auftritt, wo sich der Kreuzkorrelationskoeffizient über längere Zeit in der Umgebung eines der Grenzwerte aufhält, so kann ein zu häufiger Wechsel der erfaßten Tonbetriebsart vermieden werden, indem die zwei Grenzwerte jeweils durch Paare von Grenzwerten ersetzt werden, wobei in dem Falle, daß der Kreuzkorrelationskoeffizient abnimmt, der jeweils niedrigere und im anderen Fall der jeweils höhere Grenzwert eines Paares für die Entscheidung über den Tonbetriebszustand zugrundegelegt wird. Auf diese Weise läßt sich eine Hysterese erzielen.

Im Falle einer Zweikanalton-Übertragung sind Situationen denkbar, wo die auf beiden Kanälen übertragenen Tonsignale über längere Zeitspannen hinweg identisch sind. Eine solche Situation kann sich z.B. bei der Ausstrahlung eines Spielfilms ergeben, wenn längere Zeit nicht gesprochen wird und lediglich die Filmmusik läuft, deren Tonspur bei der Synchronisation eines Films nicht geändert wird. Um zu verhindern, daß in einer solchen Situation am Empfänger die Information darüber, daß es sich um ein Zweikanaltonsignal handelt, verloren geht, ist es denkbar, einen extrem kleinen Wert von $\varepsilon$ zu verwenden, der einer Zeitkonstanten der Mittelung in der Größenordnung von ein paar Minuten entsprechen kann. Dies führt allerdings zu einer erheblichen Trägheit der Erfassung. Dies könnte im Prinzip dazu führen, daß es zu Beginn eines Programms mit Zweikanalton längere Zeit dauert, bis korrekt die Zweikanaltonbetriebsart erfaßt wird, mit der Folge, daß in der Zwischenzeit beide Kanäle gleichzeitig am Empfänger ausgegeben werden. Diesem Problem läßt sich jedoch begegnen, indem die Entwicklungstendenz des Kreuzkorrelationskoeffizienten c in der Metrikschaltung 3 überwacht wird und unterschiedliche Zeitkonstanten für die gleitende Mittelwertbildung zugrundegelegt werden, je nachdem, ob der Kreuzkorrelationskoeffizient eine steigende oder fallende Tendenz aufweist. Wenn bei fallender Tendenz des Kreuzkorrelationskoeffizienten die Zeitkonstante erheblich kürzer als bei steigender Tendenz gewählt wird, ist die Vorrichtung in der Lage, eine Zweikanalton-Sendung mit geringer Verzögerung (wieder) korrekt zu identifizieren, so daß der Ton korrekt am Empfänger ausgegeben werden kann. Wenn die korrekte Unterscheidung einer Stereo-Sendung von einer Zweikanalton-Sendung demgegenüber länger dauert, so ist dies relativ unkritisch, denn wenn letztere fälschlicherweise als Zweikanalton-Sendung beurteilt wird, so hat dies allenfalls zur Folge, daß entweder nur der L- oder R-Kanal des Tonsignals ausgegeben wird, was aber die Verständlichkeit des Tons in der Regel nicht beeinträchtigt.

Bei dem in der Figur gezeigten Ausführungsbeispiel der Erfassungsvorrichtung wurde davon ausgegangen, daß an einem Eingang direkt das vom Tonträger TT1 abgeleitete Signal 0,5 (L+R) anliegt. Selbstverständlich kann an diesem Eingang auch das Signal des rechten Tonkanals R angelegt werden, das im Empfänger ohnehin auf jeden Fall erzeugt wird. Dadurch ergibt sich eine erhöhte Empfindlichkeit der Vorrichtung, da nun Werte des normierten Kreuzkorrelationskoeffizienten c im Intervall [0; 1] möglich sind.

**Patentansprüche**

1. Verfahren zum Erfassen der Tonbetriebsart eines Funksignals mit wenigsten zwei Tonkanälen (0,5 (L+R), R; L, R), **dadurch gekennzeichnet, daß** eine Metrik für die Ähnlichkeit der Signale der zwei Tonkanäle definiert wird, und daß die Tonbetriebsart anhand eines an den Signalen der Tonkanäle ermittelten Werts der Metrik festgestellt wird.

2. Verfahren nach Anspruch 1, **dadurch gekennzeichnet, daß** festgestellt wird, daß die Tonbetriebsart Zweikanalton ist, wenn die Metrik einen vorgegebenen ersten Grenzwert unterschreitet.

3. Verfahren nach Anspruch 1 oder 2, **dadurch gekennzeichnet, daß** festgestellt wird, daß die Tonbetriebsart Mono ist, wenn die Metrik einen zweiten Grenzwert überschreitet, der höher als der erste ist, und daß festgestellt wird, daß die Tonbetriebsart Stereo ist, wenn die Metrik zwischen den zwei Grenzwerten liegt.

4. Verfahren nach einem der vorhergehenden Ansprüche, **dadurch gekennzeichnet, daß** die Metrik das Bilden der Differenz der Signale der zwei Tonkanäle beinhaltet.

5. Verfahren nach einem der Ansprüche 1 bis 4, **dadurch gekennzeichnet, daß** die Metrik das Bilden einer Kreuzkorrelation der Signale der zwei Tonkanäle beinhaltet.

6. Verfahren nach Anspruch 5, **dadurch gekennzeichnet, daß** die Kreuzkorrelation auf die Leistung der Signale der zwei Tonkanäle normiert wird.

7. Vorrichtung zum Erfassen der Tonbetriebsart eines Funksignals, insbesondere für einen Fernseh- oder Rundfunkempfänger, mit einer Metrikschaltung (3) zum ermitteln eines für die Ähnlichkeit der Signale von wenigstens zwei Tonkanälen (0,5(L+R), R; L, R) des Funksignals repräsentativen Metrikwerts und einem Komparator (4) zum Feststellen der Tonbetriebsart durch Vergleichen des Metrikwerts mit wenigstens einem Grenzwert.

8. Vorrichtung nach Anspruch 7, **dadurch gekennzeichnet, daß** an wenigstens einem der Eingänge der Metrikschaltung (3) ein Filter (1) zum Unterdrücken eines in einem Tonkanal(R) enthaltenen Hilfsträgersignals vorgesehen ist.

Fig.

0,5(L+R) → [1] → 0,5(L+R)

2

R+54kHz → [1]  R

[3] $c_t$

[4] →